(19) Europäisches Patentamt
European Patent Office
Office européen des brevets

(11) **EP 2 027 433 B1**

(12) **FASCICULE DE BREVET EUROPEEN**

(45) Date de publication et mention
de la délivrance du brevet:
**22.08.2018 Bulletin 2018/34**

(21) Numéro de dépôt: **07803756.1**

(22) Date de dépôt: **15.06.2007**

(51) Int Cl.:
***G01B 11/06*** *(2006.01)*

(86) Numéro de dépôt international:
**PCT/FR2007/000995**

(87) Numéro de publication internationale:
**WO 2007/144517 (21.12.2007 Gazette 2007/51)**

(54) **PROCÉDÉ POUR MESURER L'ÉPAISSEUR D'UN REVÊTEMENT SUR UN SUBSTRAT**

VERFAHREN ZUM MESSEN DER BESCHICHTUNGSDICKE AUF EINEM SUBSTRAT

METHOD OF MEASURING THE THICKNESS OF A COATING ON A SUBSTRATE

(84) Etats contractants désignés:
**AT BE BG CH CY CZ DE DK EE ES FI FR GB GR
HU IE IS IT LI LT LU LV MC MT NL PL PT RO SE
SI SK TR**

(30) Priorité: **15.06.2006 FR 0605319**

(43) Date de publication de la demande:
**25.02.2009 Bulletin 2009/09**

(73) Titulaire: **Sidel Participations
76930 Octeville Sur Mer (FR)**

(72) Inventeurs:
• **RIUS, Jean-Michel
76930 Octeville sur Mer (FR)**

• **MALAISE, Daniel
76930 Octeville sur Mer (FR)**

(74) Mandataire: **Grassin d'Alphonse, Emmanuel Jean
Marie et al
Sidel Participations
Avenue de la Patrouille de France
76930 Octeville-sur-mer (FR)**

(56) Documents cités:
**WO-A-2005/103605     US-A- 4 748 329
US-B1- 6 392 756**

**Description**

L'invention a trait à la mesure, sur un échantillon formé d'un substrat pourvu d'un revêtement, de l'épaisseur de ce revêtement.

Bien que l'invention puisse en principe être appliquée à tous les domaines dans lesquels on est confronté à la nécessité de revêtir un substrat, les problèmes qu'ont rencontrés les inventeurs se sont posés dans le domaine de la fabrication des récipients.

Rappelons que la technique la plus répandue pour la fabrication des récipients est le soufflage à partir d'ébauches réalisées dans une matière thermoplastique telle que le PET (polyéthylène téréphtalate).

Ce type de matière s'étant révélé perméable aux gaz, et notamment à l'oxygène, il a été proposé, pour certaines applications, de traiter les récipients de manière à les munir, généralement sur la face interne de leur paroi, d'une couche barrière retardant la migration des gaz au travers de celle-ci et protégeant ainsi de l'oxydation le contenu du récipient. Citons à titre d'exemple les couches barrière à base de carbone amorphe hydrogéné, de type PLC (polymer like carbon) ou DLC (diamond like carbon), déposées par plasma en phase vapeur (PECVD). Pour illustrer ce type de technologie, on pourra notamment se référer au brevet européen EP 1 068 032 (ou à son équivalent américain US 6 919 114) au nom de Sidel, ou au brevet européen EP 773 166 (ou à son équivalent américain US 6 589 619) au nom de Kirin.

Il s'est avéré que la qualité de la couche barrière - c'est-à-dire sa capacité à retarder la migration des gaz - dépend fortement de son épaisseur. En théorie, l'épaisseur de la couche dépend elle-même du temps de traitement du récipient. A titre indicatif, précisons que l'épaisseur de la couche est généralement comprise entre 50 nm et 200 nm (1 nm = $10^{-9}$ m), pour des temps de traitement compris entre 1s et 3s. En pratique, la couche est rarement homogène : elle présente en effet des variations d'épaisseur suivant les parties du récipient (fond, corps, col). Si la présence de la couche barrière est aisément décelable (elle jaunit en effet un récipient à l'origine transparent et incolore), ses variations de teinte suivant les parties du récipient sont imperceptibles à l'oeil nu.

Or, pour diverses raisons (notamment la nécessité d'optimiser le temps de traitement pour maximiser les cadences tout en minimisant la consommation de gaz précurseur), il apparaît souhaitable de contrôler l'épaisseur de la couche barrière sur les récipients traités.

Une méthode classique consiste à effectuer régulièrement sur des récipients traités une mesure physique, par exemple au moyen d'un profilomètre. Suivant cette méthode, on introduit sur la chaîne de fabrication un récipient muni, sur sa face interne, d'au moins un adhésif. Une fois traité, le récipient est prélevé ; la zone munie de l'adhésif est découpée et l'adhésif enlevé. Au moyen du profilomètre, on mesure la hauteur de la dénivellation entre la zone initialement munie de l'adhésif (et par conséquent non revêtue) et la zone environnante, revêtue : cette dénivellation correspond à l'épaisseur du revêtement.

Si cette méthode permet de mesurer avec précision l'épaisseur de la couche barrière, elle nécessite toutefois de longs préparatifs et de nombreuses manipulations, qui interdisent son application spontanée à une chaîne de fabrication. En effet, dans l'hypothèse où une dérive serait constatée, le temps écoulé entre le prélèvement du récipient et l'obtention des mesures est suffisamment important pour qu'un grand nombre (pouvant atteindre plusieurs milliers) de récipients aient déjà été traités de manière incorrecte, tous ces récipients devant alors être mis au rebut. C'est pourquoi cette méthode n'est généralement employée qu'à titre de simple vérification ponctuelle de la qualité du traitement.

Des méthodes optiques, non destructives, ont très récemment fait leur apparition.

Une première, proposée par la société Hokkai Can dans sa demande de brevet européen EP 1 500 600 (voir également l'équivalent américain US 2005/0118365), se fonde sur les propriétés colorantes de la couche barrière. Elle consiste à éclairer successivement un récipient non revêtu et un récipient revêtu, puis à comparer dans un repère CIE L*a*b*, au moyen d'un colorimètre, les valeurs respectives du paramètre b* de la lumière transmise. Il est affirmé dans ce document, en effet, que la présence de la couche barrière se traduit par une augmentation du paramètre b*, caractéristique d'une saturation dans le jaune, la variation Δb* étant censée croître avec l'épaisseur de la couche. Selon ce document, il est souhaitable que la variation Δb* soit comprise entre 2 et 7. La fonction de corrélation entre la variation Δb* et l'épaisseur de la couche n'est toutefois pas fournie, un seul exemple étant présenté, en vertu duquel à une variation Δb* de 3 points correspond une épaisseur de la couche de 0,04 $\mu$m (soit 40 nm).

Une hypothèse (non exprimée dans ce document), sur laquelle repose cette méthode, est que la paroi du récipient contrôlé transmette le jaune. En pratique, les récipients sont majoritairement incolores : ils sont par conséquent à peu près transparents aux longueurs d'onde de l'ensemble du spectre visible (400-780 nm ; pour mémoire, le jaune s'étend entre 577 et 600 nm). Le problème de la transmission dans le jaune ne se pose donc pas.

Par contre, cette méthode est manifestement inapplicable aux récipients colorés, pu plus exactement aux récipients dont la couleur absorbe le jaune (il est bien connu que le bleu, notamment, absorbe le jaune). Or il est de plus en plus fréquent que l'on soit amené (notamment à des fins esthétiques) à revêtir d'une couche barrière des récipients colorés. Le problème du contrôle de l'épaisseur sur ce type de récipient n'est donc pas résolu par le document Hokkai Can.

Suivant une seconde méthode, proposée par la société Plastipak dans sa demande internationale WO 2004/012999 (voir également l'équivalent américain US 2004/0065841), on éclaire dans les ultraviolets la paroi du récipient, et on détermine, à partir de la quantité de lumière transmise au travers de la paroi, l'épaisseur du revêtement. Outre que ce document ne révèle pas la fonction de corrélation entre la quantité de lumière transmise et l'épaisseur du revêtement, la méthode qu'il décrit présente *a priori* le même inconvénient que la méthode proposée par Hokkai Can. En effet, dans la mesure où le récipient est supposé transmettre les ultraviolets, le problème du contrôle de l'épaisseur du revêtement sur un récipient de couleur quelconque (par exemple ne transmettant pas les ultraviolets) n'est pas résolu. Un procédé de mesure d'épaisseur d'un récipient plastique revêtu est par ailleurs décrit dans la demande WO 2005/103605.

L'invention vise notamment à remédier aux inconvénients précités, en proposant un procédé de contrôle de l'épaisseur d'un revêtement sur la paroi d'un récipient (et par extension sur tout substrat), qui permette de s'affranchir de la couleur de celui-ci.

A cet effet, l'invention propose un procédé pour contrôler, sur un échantillon composé d'un substrat muni d'un revêtement, l'épaisseur du revêtement en au moins un point de contrôle prédéterminé, ce procédé comprenant une étape de calibration comprenant les opérations suivantes :

a) fournir un échantillon test, de même fabrication que l'échantillon à contrôler ;

b) sélectionner sur l'échantillon test un point de mesure prédéterminé ;

c) éclairer l'échantillon test au moyen d'un faisceau lumineux de lumière blanche, focalisé sur le revêtement en un point de mesure prédéterminé ;

d) recueillir la part du faisceau transmise au travers de l'échantillon test ;

e) établir le spectre de l'intensité lumineuse transmise au travers de l'échantillon test sur une gamme prédéterminée de longueurs d'onde ;

f) comparer ce spectre au spectre, préétabli, de l'intensité lumineuse transmise, au même point de mesure, au travers d'un échantillon non revêtu de même fabrication que l'échantillon à contrôler ;

g) repérer une bande passante commune aux deux spectres, où peut être détecté un écart entre ceux-ci ;

h) sélectionner au sein de cette bande passante une longueur d'onde correspondant à un écart entre les deux spectres,

i) mesurer la valeur de l'intensité lumineuse transmise correspondant à cette longueur d'onde sur le spectre de l'échantillon test, et en déduire, par calcul du quotient entre l'intensité lumineuse transmise et l'intensité lumineuse incidente, le coefficient de transmission à la longueur d'onde sélectionnée lors de l'opération h);

j) répéter les opérations a) à d) et i) pour une pluralité de points de mesure ;

k) mesurer de manière physique en chaque point de mesure, une hauteur de dénivellation entre une zone revêtue et une zone non revêtue dudit échantillon test correspondant à l'épaisseur réelle du revêtement;

l) établir, à partir des mesures effectuées, une fonction de corrélation entre, d'une part, le coefficient de transmission à la longueur d'onde sélectionnée lors de l'opération h), et l'épaisseur du revêtement d'autre part ;

ce procédé comprenant en outre une étape de mesure comprenant les opérations suivantes :

m) mesurer l'intensité lumineuse transmise, au point de contrôle, au travers de la paroi de l'échantillon à contrôler, à la longueur d'onde sélectionnée lors de l'opération h) ;

n) calculer, à partir de la mesure effectuée lors de l'opération m) et de la fonction de corrélation, l'épaisseur du revêtement au point de contrôle.

Ce procédé permet de mesurer l'épaisseur du revêtement quelle que soit la couleur du substrat.

La longueur d'onde sélectionnée lors de l'opération h) correspond de préférence à un pic de transmission.

Suivant un mode de réalisation, l'étape de calibration comprend en outre les opérations suivantes :

h') sélectionner une longueur d'onde dans l'infrarouge ;

i') mesurer la valeur de l'intensité lumineuse transmise correspondant à cette longueur d'onde au travers de l'échantillon test ;

dans lequel la fonction de corrélation, établie lors de l'opération l), est définie comme suit :

$$t(P) = a \cdot (-\ln \Gamma_\lambda(P) + R \cdot \ln \Gamma_{IR}(P)) + b$$

où :

- $t(P)$ est l'épaisseur, à calculer, du revêtement au point $P$,
- $\Gamma_\lambda(P)$ est le coefficient de transmission au point $P$ à la longueur d'onde ($\lambda$) sélectionnée lors de l'opération h),
- $\Gamma_{IR}(P)$ est le coefficient de transmission au point $P$ dans l'infrarouge à la longueur d'onde $IR$ sélectionnée lors de l'opération h'),
- $a$ et $b$ sont des constantes ;
- $R$ est la moyenne, pour un ensemble de points $P$ de mesure sélectionnés sur un ou plusieurs récipients tests non revêtus similaires au récipient à contrôler, d'un coefficient $R(P)$, dit de pondération et défini comme suit :

$$R(P) = \frac{\ln \Gamma_\lambda(P)}{\ln \Gamma_{IR}(P)}$$

et dans lequel l'étape de mesure comprend les opérations suivantes :

m') mesurer l'intensité lumineuse transmise, au point de contrôle, au travers de l'échantillon à contrôler, à la longueur d'onde *IR* sélectionnée dans l'infrarouge à l'opération h'),
n') déduire, à partir des coefficients de transmission mesurés lors des opérations m) et m') et de la fonction de corrélation établie à l'étape de calibration, l'épaisseur du revêtement au point de contrôle.

La longueur d'onde *IR* sélectionnée dans l'infrarouge lors de l'opération h') est de préférence supérieure ou égale à 800 nm ; elle est par exemple égale à 1000 nm environ.

Suivant un mode de réalisation, les opérations a) à d), i), j) et k) sont répétées pour une pluralité d'échantillons tests similaires.

La gamme de longueur d'ondes choisie dans l'opération e) est de préférence comprise entre 300 et 1200 nm.

Ce procédé peut être appliqué au contrôle de l'épaisseur d'un revêtement, par exemple en carbone amorphe, le substrat pouvant quant à lui être réalisé dans une matière thermoplastique.

Quant aux échantillons, il peut s'agir, comme cela est évoqué ci-dessus, de récipients dont la paroi revêtue constitue le substrat.

D'autres objets et avantages de l'invention apparaîtront à la lumière de la description faite ci-après en référence aux dessins annexés dans lesquels :

- la figure 1, scindée en deux parties 1A et 1B, est un diagramme illustrant les différentes opérations d'un procédé conforme à l'invention ;
- la figure 2 est un graphe montrant la superposition de deux spectres établis sur une même gamme prédéterminée de longueurs d'onde, à savoir :

  - le spectre de l'intensité lumineuse transmise au travers de la paroi d'un récipient de couleur violette revêtu d'une couche barrière en carbone amorphe hydrogéné au cours d'un traitement PECVD d'une durée de 2,5s ;
  - le spectre de l'intensité lumineuse transmise au travers de la paroi d'un récipient de même fabrication, non revêtu ;

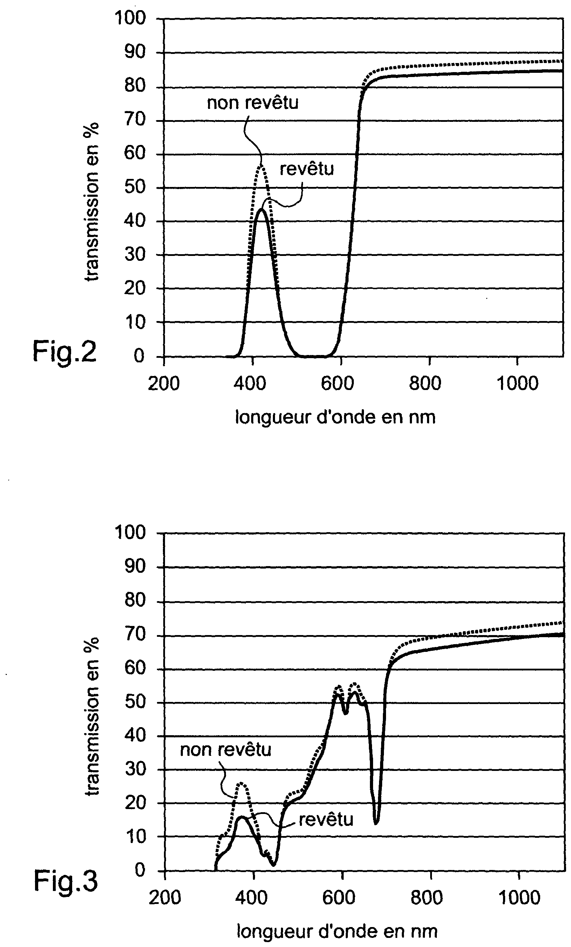

- la figure 3 est un graphe montrant la superposition de deux spectres établis sur une même gamme prédéterminée de longueurs d'onde, à savoir :

  - le spectre de l'intensité lumineuse transmise au travers de la paroi d'un récipient de couleur ambre revêtu d'une couche barrière en carbone amorphe hydrogéné déposée par traitement PECVD d'une durée de 2,5s ;
  - le spectre de l'intensité lumineuse transmise au travers de la paroi d'un récipient de même fabrication, non revêtu ;

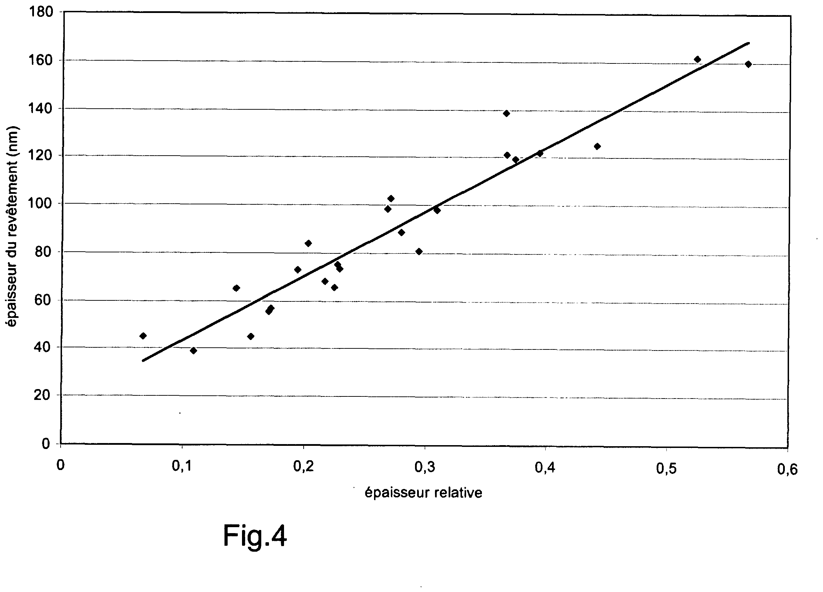

- la figure 4 est un graphe montrant un exemple de fonction de corrélation entre une grandeur, dénommée épaisseur relative (fonction de la transmission), et l'épaisseur du revêtement ;

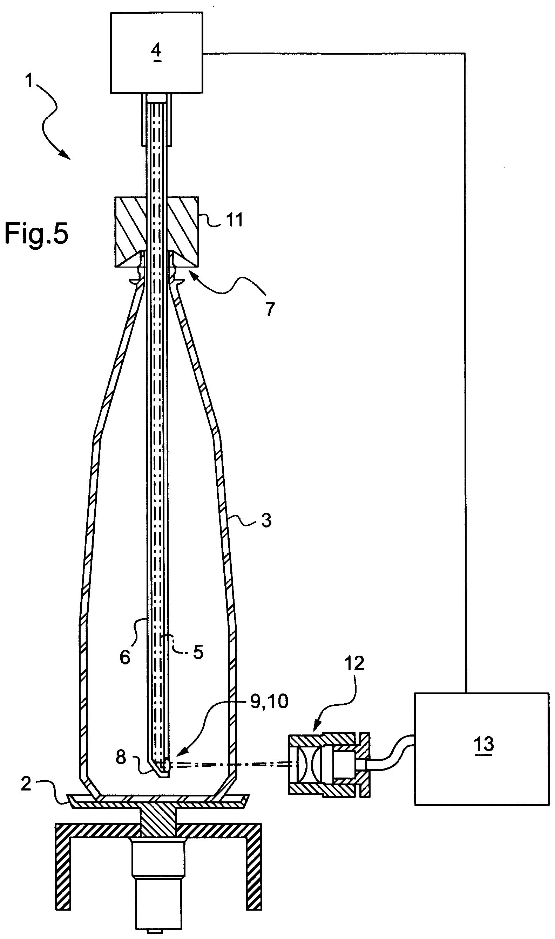

- la figure 5, enfin, est une vue d'élévation en coupe montrant un dispositif permettant de mettre en oeuvre le procédé suivant l'invention.

Comme nous l'avons vu en introduction, l'invention vise à permettre un contrôle non destructif de l'épaisseur d'un revêtement dont est pourvu un substrat susceptible de transmettre au moins une partie du spectre lumineux.

Dans ce qui suit, le substrat est constitué par la paroi d'un récipient en matière thermoplastique (par exemple en PET), prélevé sur une chaîne de fabrication à la sortie d'une unité de traitement au sein de laquelle sur le récipient, préalablement soufflé, est déposé un film mince ayant des propriétés barrière. Dans ce qui suit, ce dépôt est indifféremment appelé *revêtement* ou *couche* (barrière).

Il ne s'agit pas ici de décrire le procédé de dépôt, pour lequel l'homme du métier pourra se référer aux documents de l'état de la technique, et notamment au brevet européen précité EP 1 068 032, qui décrit un procédé et une installation permettant de déposer par plasma, sur la face interne de la paroi d'un récipient, une couche de carbone amorphe.

Précisons que le temps de traitement a une incidence directe sur l'épaisseur de la couche, sans qu'il soit possible à l'heure actuelle d'établir une corrélation fiable entre ces deux paramètres, à cause notamment du défaut d'homogénéité de la couche suivant les parties du récipient, ce défaut d'homogénéité pouvant lui-même résulter, au moins en partie, de la forme de la bouteille, dont le diamètre n'est pas nécessairement constant.

Comme la seule mesure du temps de traitement ne suffit pas à s'assurer que le revêtement présente l'épaisseur visée, il apparaît nécessaire de contrôler celle-ci, soit en continu sur la chaîne de fabrication, soit de manière épisodique en effectuant des prélèvements sur cette dernière.

Le procédé suivant l'invention comprend, de manière schématique, deux étapes principales, à savoir :

- une étape de calibration, visant, à partir de mesures physiques de l'épaisseur réelle du revêtement, à établir une fonction de corrélation entre l'épaisseur d'une part et, d'autre part, un coefficient, mesuré de manière optique, de transmission de la lumière au travers de la paroi du récipient revêtu (rappelons que la lumière incidente frappant la paroi est, pour partie réfléchie, pour partie absorbée, et pour partie transmise : le coefficient de transmission est une grandeur sans dimension comprise entre 0 et 100, qui désigne le pourcentage de lumière transmis), et

- une étape de contrôle, suivant laquelle on mesure sur un récipient à contrôler le coefficient de transmission précité, pour en déduire par calcul, à partir de la fonction de corrélation établie à l'étape de calibration, l'épaisseur du revêtement au point de contrôle.

Ce procédé est prévu pour permettre une mesure de l'épaisseur du revêtement quelle que soit la couleur du récipient, c'est-à-dire que celui-ci soit incolore, ou que des pigments aient été mélangés à la matière thermoplastique dans laquelle il est fabriqué. Les mesures, fournies à titre d'exemple, effectuées sur deux récipients colorés seront exposées ci-après.

Dans ce qui suit, on qualifie de « similaires » des récipients issus de la même fabrication et de même couleur, qu'ils soient ou non revêtus. On appelle « gamme » un ensemble de récipients similaires.

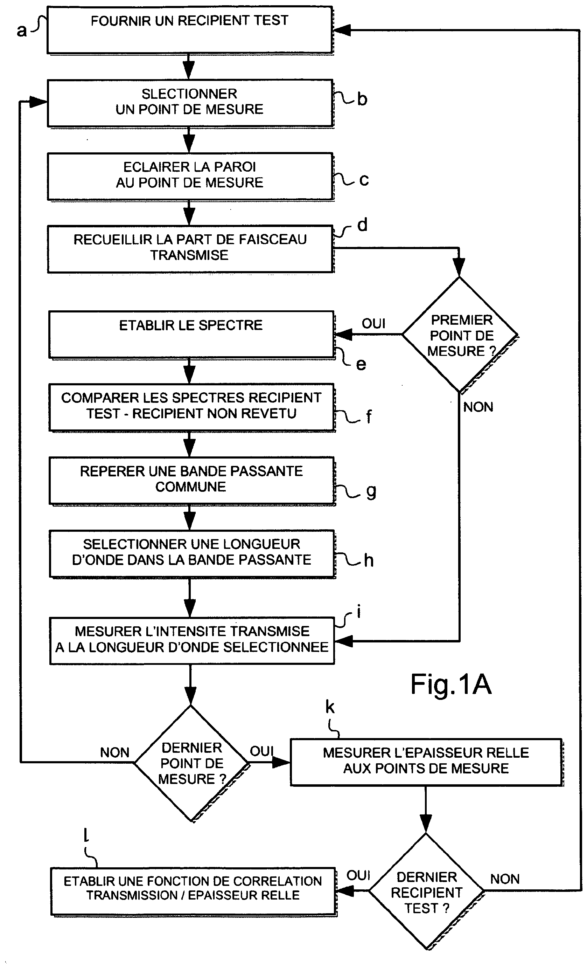

L'étape de calibration, illustrée sur la figure 1A, comprend une première opération a) de fourniture d'un récipient test, revêtu, similaire au récipient sur lequel on souhaite effectuer la mesure d'épaisseur (récipient à contrôler).

Une deuxième opération b) consiste à sélectionner sur le récipient test un point de mesure, repéré par ses coordonnées cylindriques sur le récipient (hauteur h, mesurée à partir du fond du récipient, rayon r, mesuré à partir de l'axe principal du récipient, et position angulaire $\theta$, mesurée à partir d'une position de référence autour de l'axe principal). Il est à noter que pour certains récipients, symétriques de révolution, le rayon r est constant sur une même circonférence quelle que soit la position angulaire $\theta$. Pour d'autres, asymétriques, le rayon varie en fonction de la position angulaire $\theta$.

Une troisième opération c) consiste à éclairer la paroi du récipient, de préférence du côté du revêtement, au moyen d'un faisceau lumineux de lumière blanche focalisé sur le revêtement au point de mesure.

Par « lumière blanche », on entend une lumière s'étendant sur une gamme de longueurs d'onde allant de l'ultraviolet à l'infrarouge. Les inventeurs ont constaté qu'une source lumineuse émettant dans une gamme de longueurs d'onde comprises entre 300 et 1200 nm permet d'obtenir des mesures significatives quelle que soit la couleur du récipient.

Le choix de la source lumineuse est laissé à la libre appréciation de l'homme du métier. Deux technologies ont été expérimentées avec succès : la première consiste à combiner deux lampes, à savoir une lampe à incandescence de type halogène à filament de tungstène (émettant dans le visible et l'infrarouge court) et une lampe de type à décharge au Deutérium (émettant dans l'ultraviolet) ; la seconde consiste à employer une lampe unique de type à décharge au Xénon, qui émet une lumière blanche couvrant la gamme 300-1200 nm.

Cette gamme est particulièrement adaptée à la mesure sur des récipients en PET. Ce matériau présente en effet les propriétés optiques suivantes :

- dans les ultraviolets, il est quasiment opaque pour des longueurs d'onde inférieures à 300 nm,
- dans l'infrarouge (pour des longueurs d'onde supérieures à 800 nm), il présente un comportement optique extrêmement proche de celui des revêtements carbonés (leurs pics d'absorption, en particulier, se confondent quasiment). Il est notamment difficile de déterminer lequel, du récipient ou du revêtement, est à l'origine d'une absorption constatée du faisceau lumineux, ce qui rend dans ces longueurs d'onde les mesures inexploitables.

Une quatrième opération d) consiste à recueillir, de l'autre côté de la paroi, la part du faisceau transmise au travers de celle-ci.

Une cinquième opération e) consiste à établir le spectre de l'intensité lumineuse transmise (ou courbe spectrale) au travers de la paroi sur une gamme prédéterminée de longueurs d'onde, incluse dans - ou de préférence confondue avec - la gamme précitée, soit 300-1200 nm.

Une sixième opération f) consiste à comparer ce spectre avec un spectre, préétabli, de l'intensité lumineuse transmise au travers de la paroi d'un récipient similaire au récipient test (c'est-à-dire similaire au récipient à contrôler), mais non revêtu, et au même point de mesure (c'est-à-dire en un point de mêmes coordonnées).

Cette opération est illustrée sur les figures 2 et 3, sur chacune desquelles on a représenté les spectres de l'intensité lumineuse transmise, en fonction de la longueur d'onde, au travers de la paroi de deux récipients similaires en PET, l'un non revêtu et l'autre revêtu d'une couche barrière en carbone amorphe déposée par traitement plasma d'une durée de 2,5s :

- sur la figure 2, pour un récipient de couleur violette,
- sur la figure 3, pour un récipient de couleur ambre.

Il est à noter que dans chaque cas les spectres du récipient revêtu et du récipient non revêtu présentent les mêmes variations, et notamment les mêmes pics de transmission et d'absorption, ce qui tend à monter que la déviation colorimétrique engendrée par le revêtement est très faible.

Une septième opération g) consiste à repérer une bande passante commune aux deux spectres, où l'on peut détecter un écart entre eux.

Dans le cas du récipient de couleur violette par exemple (figure 2), on repère une bande passante entre 350 et 450 nm (c'est-à-dire dans le violet et l'ultraviolet).

Dans le cas du récipient de couleur ambre (figure 3), on peut repérer plusieurs bandes passantes : une première entre 320 et 420 nm (dans le violet et l'ultraviolet) et une deuxième entre 450 et 700 nm, soit sur la majeure partie du domaine visible. Il est nécessaire dans ce cas de choisir l'une des deux bandes passantes : bien que la première corresponde à des transmissions plus faibles, on note un taux d'absorption plus important du revêtement : le choix se portera donc de préférence sur cette première bande passante, qui apparaît plus significative de l'influence du revêtement sur la variation de transmission de la lumière.

Une huitième opération h) consiste à sélectionner dans la bande passante repérée lors de l'opération f) une longueur d'onde correspondant à un écart entre les spectres. Bien qu'au sein de la bande passante plusieurs longueurs d'ondes répondent manifestement à ce critère, le choix se portera de préférence sur une longueur d'onde correspondant à un pic de transmission, pour lequel le coefficient de transmission est stable (la pente du spectre étant faible ou nulle), sa mesure étant dès lors relativement fiable.

Dans le cas du récipient de couleur violette précité (figure 2), la longueur d'onde sélectionnée est ainsi de 410 nm, tandis que dans le cas du récipient de couleur ambre (figure 3), la longueur d'onde sélectionnée est de 370 nm.

Une neuvième opération i) consiste à mesurer, à partir du spectre du récipient test (revêtu), l'intensité transmise au travers de la paroi du récipient et en déduire, par calcul du quotient entre l'intensité lumineuse transmise et l'intensité lumineuse incidente, le coefficient de transmission à la longueur d'onde sélectionnée lors de l'opération h), ce coefficient étant ensuite mémorisé.

A titre d'exemple, dans le cas du récipient de couleur violette précité (figure 2), le coefficient de transmission à la longueur d'onde sélectionnée (410 nm) est de 57%, tandis que dans le cas du récipient de couleur ambre (figure 3), le coefficient de transmission à la longueur d'onde sélectionnée (370 nm) est de 26%.

Les opérations a), b), c), d) et i) sont répétées pour une pluralité de points de mesure prédéterminés. Il est à noter que les opérations e), f), g) et h) ne sont nécessaires que pour le premier point de mesure, car elles visent à sélectionner pour une gamme de récipients similaires une longueur d'onde convenable commune permettant d'effectuer les mesures sur chacun d'entre eux.

Lorsque les coefficients de transmission ont été mémorisés pour tous les points de mesure, l'opération suivante k) consiste à mesurer en chacun de ceux-ci, de manière physique (par exemple au moyen d'un profilomètre, suivant la procédure décrite succinctement en introduction), l'épaisseur réelle du revêtement.

Il est à noter que les opérations a), b), c), d), i) et k) peuvent être répétées pour plusieurs récipients tests revêtus similaires, ayant par exemple subi des traitements de durées différentes (les épaisseurs de leurs revêtements respectifs étant par conséquent présumées différentes), de sorte à disposer d'un nombre suffisant de couples (*coefficient de transmission, épaisseur réelle*) pour permettre l'établissement d'une corrélation fiable entre ces deux paramètres.

L'opération suivante l) consiste à établir une fonction de corrélation entre, d'une part, le coefficient de transmission à la longueur d'onde sélectionnée lors de l'opération h), et l'épaisseur du revêtement d'autre part. Cette fonction est ensuite utilisée pour calculer, à partir d'une mesure de transmission sur le récipient à contrôler, l'épaisseur du revêtement au(x) point(s) de contrôle.

Nous reviendrons ci-après plus en détail sur la manière d'établir cette fonction de corrélation.

Ces opérations étant accomplies, l'étape de calibration est achevée. Les résultats des mesures optiques et physiques sont stockés, pour chaque gamme de récipients sur lesquels il est prévu de réaliser un contrôle d'épaisseur du revêtement, en vue d'être exploités au cours de l'étape de contrôle, comme nous allons à présent le voir.

L'étape de contrôle comprend une opération m) de mesure de l'intensité lumineuse transmise, au point de contrôle, au travers de la paroi du récipient à contrôler, à la longueur d'onde sélectionnée lors de l'opération h), et une opération n) de calcul, à partir de la mesure effectuée au m) et de la fonction de corrélation, l'épaisseur du revêtement au point de contrôle.

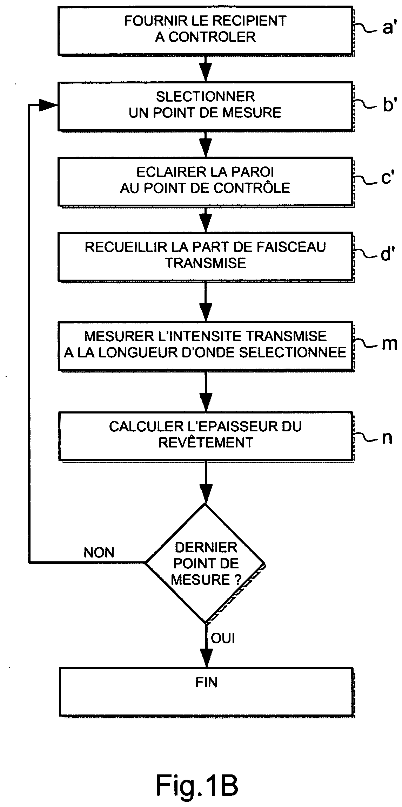

Plus précisément, comme illustré sur la figure 1B, l'étape de contrôle comprend, préalablement à l'opération m) de mesure, les opérations suivantes :

- une première opération a') consistant à fournir le récipient à contrôler, par exemple par prélèvement de celui-ci sur la chaîne de fabrication au sortir de l'unité de traitement au sein de laquelle est déposé le revêtement ;
- une deuxième opération b') consistant à sélectionner le point de contrôle souhaité ;
- une troisième opération c') consistant à éclairer la paroi du récipient au point de contrôle au moyen d'un faisceau lumineux focalisé en ce point ; ce faisceau peut être de lumière blanche, comme dans l'étape de calibration, ou d'une lumière monochromatique ou polychromatique couvrant la longueur d'onde sélectionnée lors de l'opération h) ;
- une quatrième opération d') consistant à recueillir la part de faisceau transmise au travers de la paroi du récipient.

Dans l'hypothèse où il serait prévu de réaliser les mesures en plusieurs points, les opérations a', b', c'), d'), m) et n) sont répétées pour chaque point de mesure.

Ces mesures étant non destructives et n'affectant pas les propriétés mécaniques et chimiques du récipient contrôlé, celui-ci peut être remis en circulation dans la chaîne de fabrication, en vue de son remplissage.

Revenons à présent sur l'établissement de la fonction de corrélation (correspondant à l'opération l) décrite ci-dessus) entre le coefficient de transmission et l'épaisseur du revêtement.

Plusieurs méthodes permettent d'établir une telle fonction.

Une première - la plus simple - consiste à tracer un nuage de points issus des doublets de mesures (optique et physique) réalisées au cours de l'étape de calibration, puis à calculer par interpolation une fonction de corrélation. Si cette méthode présente l'avantage de la simplicité, elle peut toutefois aboutir à des incertitudes dues au choix du modèle d'interpolation (polynomial, trigonométrique, exponentiel, etc.).

Nous exposons ci-après une deuxième méthode, plus complexe que la première mais qui présente, comme nous le verrons, l'avantage de minimiser l'impact des défauts du substrat.

Cette méthode part du constat évoqué plus haut que, dans l'infrarouge, les spectres de l'intensité lumineuse transmise au travers de la paroi avec et sans revêtement sont quasiment superposés. En d'autres termes, l'absorption de la lumière par le revêtement dans l'infrarouge n'est pas significative. A priori, ce constat devrait donc rendre inexploitables les mesures effectuées dans l'infrarouge. En réalité, on peut exploiter ces mesures de manière indirecte. En effet, dans la mesure où la couche n'influence que peu la transmission dans l'infrarouge, on peut supposer que toute variation anormale de la transmission est due à une modification structurelle du substrat (présence d'inclusions ou variation d'épaisseur par exemple) par rapport à une moyenne statistique constatée sur la chaîne de fabrication.

Une mesure effectuée dans l'infrarouge est par conséquent exploitée pour pondérer la mesure effectuée à la longueur d'onde $\lambda$ de sorte à minimiser sur cette mesure les éventuels écarts de transmission dus aux défauts du substrat et à ses variations d'épaisseur qui ne manquent pas d'apparaître d'un récipient test à l'autre.

Ainsi, suivant cette méthode, on ajoute à l'étape de calibration une première opération h'), contemporaine de l'opération h), consistant à sélectionner une longueur d'onde (notée par commodité *IR*) dans l'infrarouge (de préférence dans l'infrarouge moyen, où le spectre est relativement stable, au-delà de 800 nm, et par exemple à 1000 nm environ), et une deuxième opération i'), contemporaine de l'opération i), consistant à mesurer la valeur de l'intensité lumineuse transmise correspondant à cette longueur d'onde sur le spectre du récipient test. De même que l'opération i), l'opération i') est répétée pour chaque point de mesure et pour chaque récipient test.

L'opération l) de détermination de la fonction de corrélation est alors conduite comme suit.

Pour chaque point $P$ de mesure, on calcule une grandeur $E$, sans dimension, appelée épaisseur relative et définie comme suit :

$$E(P) = -\ln \Gamma_{\lambda}(P) + R \cdot \ln \Gamma_{IR}(P)$$

où $R$ est la moyenne arithmétique, pour un ensemble de points $P$ de mesure sélectionnés sur un ou plusieurs récipients tests, similaires au récipient à contrôler mais non revêtus, d'une grandeur sans dimension, appelée coefficient de pondération, qui, pour chaque doublet de mesures optiques (coefficient de transmission à la longueur d'onde $\lambda$ et coefficient de transmission dans l'infrarouge à la longueur d'onde *IR*) effectuées au point $P$, est égal au rapport des logarithmes de ces coefficients :

$$R(P) = \frac{\ln \Gamma_{\lambda}(P)}{\ln \Gamma_{IR}(P)}$$

Il ressort des expériences conduites par les inventeurs que l'épaisseur réelle, mesurée physiquement en chaque point $P$, est une fonction sensiblement linéaire de l'épaisseur relative au même point, calculée conformément à la méthode qui précède.

A titre d'exemple, calculs et mesures ont été effectués sur plusieurs récipients similaires en PET transparent, pourvus d'un revêtement en carbone amorphe déposé par plasma au cours d'un traitement d'une durée de 1s, 2s et 2,5s respectivement.

Le tableau qui suit fournit une série de doublets obtenus pour une pluralité de points de mesure répartis sur chacun des récipients.

| épaisseur relative | épaisseur réelle (nm) |
|---|---|
| 0,52322273 | 161,7 |
| 0,56535174 | 159,8 |
| 0,36560061 | 138,3 |
| 0,44035936 | 125,0 |
| 0,39357823 | 121,8 |
| 0,36653792 | 121,1 |
| 0,37342098 | 119,3 |
| 0,27089794 | 102,6 |
| 0,26790898 | 98,5 |
| 0,3087815 | 97,8 |
| 0,27995456 | 88,8 |
| 0,2033177 | 83,9 |
| 0,29407129 | 80,9 |
| 0,227679 | 75,1 |
| 0,22918271 | 73,5 |
| 0,1937663 | 72,9 |
| 0,21706449 | 68,1 |

(suite)

| épaisseur relative | épaisseur réelle (nm) |
|---|---|
| 0,22452518 | 65,4 |
| 0,14382297 | 65,0 |
| 0,17244316 | 56,7 |
| 0,1709512 | 55,3 |
| 0,15623151 | 45,2 |
| 0,06723764 | 45,1 |
| 0,10889669 | 39,0 |

Chacun de ces doublets est représenté par un point sur le graphe de la figure 4, en abscisse duquel est portée l'épaisseur relative tandis qu'en ordonnée est portée l'épaisseur réelle (mesurée physiquement) du revêtement : la tendance du nuage de points ainsi constitué est clairement linéaire.

La méthode des moindres carrés permet de manière simple, à partir de ce nuage de points, d'établir une fonction linéaire de corrélation entre l'épaisseur relative $E$ définie ci-dessus et l'épaisseur t du revêtement :

$$t = a \cdot E + b$$

où $a$ et $b$ sont des constantes.

Cette fonction est représentée, pour l'exemple présenté ci-dessus, par la droite tracée sur le graphe de la figure 4.

Il résulte de ce qui précède que la fonction de corrélation entre le coefficient de transmission entre la transmission $\Gamma_\lambda(P)$ au point $P$ et l'épaisseur $t(P)$ du revêtement au même point est définie comme suit :

$$t(P) = a \cdot (-\ln \Gamma_\lambda(P) + R \cdot \ln \Gamma_{IR}(P)) + b$$

Une opération supplémentaire m'), contemporaine de l'opération m), consiste à mesurer l'intensité lumineuse transmise, au point de contrôle, au travers de la paroi du récipient à contrôler, à la longueur d'onde $IR$, et une opération n'), contemporaine de l'opération n), consistant à calculer, à partir de ces mesures, l'épaisseur relative au point de mesure, laquelle est utilisée au cours de l'opération n) pour déduire, à partir de la fonction de corrélation établie à l'étape de calibration, l'épaisseur du revêtement.

Le procédé qui vient d'être décrit présente un double avantage.

D'abord, il permet d'effectuer des mesures d'épaisseur de revêtement sur des récipients de couleur. Ensuite, il permet, grâce à l'utilisation d'une fonction de corrélation appropriée, de minimiser les effets des défauts et variations d'épaisseur du substrat.

Les mesures optiques décrites ci-dessus peuvent être réalisées au moyen d'un dispositif **1** tel que représenté sur la figure 5, ce dispositif n'étant pas revendiqué. Ce dispositif **1** comprend une chambre noire (non représentée) renfermant un support **2** tournant sur lequel est placé le récipient **3** (successivement le(s) récipient(s) test(s) puis le récipient à contrôler). Le dispositif **1** comprend également une source **4** de lumière blanche, ici représentée de manière schématique, qui génère un faisceau **5** lumineux (en traits mixtes) parallèle, guidé par un périscope **6.**

Le périscope **6,** introduit dans le récipient **3** par le col **7** de celui-ci, est pourvu, à son extrémité opposée à la source **4** lumineuse, d'un miroir **8,** qui réfléchit radialement le faisceau **5,** et d'une ouverture **9** dans laquelle est monté un système optique convergent (en l'occurrence une lentille **10**) focalisant le faisceau **5** sur le revêtement, au point de mesure (respectivement au point de contrôle).

Outre qu'il est monté pivotant autour d'un axe vertical (confondu avec l'axe propre du récipient **3**), le support **2** est déplaçable verticalement, de sorte qu'il est possible de régler en hauteur et en angle la position du récipient **3** par rapport au périscope **6,** de manière à pouvoir placer au point focal de la lentille **10** le point (de mesure ou de contrôle) à éclairer.

Suivant un mode de réalisation, le périscope **6** est muni d'une bague **11** coulissante qui vient coopérer avec le col **7** du récipient **3** pour assurer le centrage de celui-ci par rapport à l'axe de rotation du support **2.**

Le dispositif **1** comprend en outre un capteur **12** optique, disposé à l'extérieur du récipient **3** en regard de l'ouverture **9** du périscope **6** pour recueillir la part transmise du faisceau **5** lumineux.

Le capteur **12** et la source **4** lumineuse sont tous deux reliés à un spectrophotomètre **13** au moyen duquel sont effectuées les mesures d'intensité lumineuse transmise pour la gamme de longueurs d'onde retenues, et au moyen duquel sont établis les spectres évoqués ci-dessus.

Quant au traitement des données recueillies, il peut être effectué par simple programmation sur un ordinateur de bureau (PC).

**Revendications**

1. Procédé pour mesurer, sur un échantillon composé d'un substrat muni d'un revêtement, l'épaisseur du revêtement en au moins un point de contrôle prédéterminé, ce procédé comprenant une étape de calibration comprenant les opérations suivantes :

   a) fournir un échantillon test, de même fabrication que l'échantillon à contrôler ;
   b) sélectionner sur l'échantillon test un point de mesure prédéterminé ;
   c) éclairer l'échantillon test au moyen d'un faisceau lumineux de lumière blanche, focalisé sur le revêtement en un point de mesure prédéterminé ;

d) recueillir la part du faisceau transmise au travers de l'échantillon test ;

e) établir le spectre de l'intensité lumineuse transmise au travers de l'échantillon test sur une gamme prédéterminée de longueurs d'onde ;

f) comparer ce spectre au spectre, préétabli, de l'intensité lumineuse transmise, au même point de mesure, au travers d'un échantillon non revêtu de même fabrication que l'échantillon à contrôler ;

g) repérer une bande passante commune aux deux spectres, où peut être détecté un écart entre ceux-ci ;

h) sélectionner au sein de cette bande passante une longueur d'onde correspondant à un écart entre les deux spectres ;

i) mesurer la valeur de l'intensité lumineuse transmise correspondant à cette longueur d'onde sur le spectre de l'échantillon test et en déduire le coefficient de transmission à la longueur d'onde sélectionnée lors de l'opération h) ;

j) répéter les opérations a) à d) et i) pour une pluralité de points de mesure ;

k) mesurer de manière physique en chaque point de mesure, une hauteur de dénivellation entre une zone revêtue et une zone non revêtue d'un échantillon correspondant à l'épaisseur réelle du revêtement ;

l) établir, à partir des mesures effectuées, une fonction de corrélation entre, d'une part, le coefficient de transmission à la longueur d'onde sélectionnée lors de l'opération h), et l'épaisseur du revêtement d'autre part ;

ce procédé comprenant en outre une étape de mesure comprenant les opérations suivantes :

m) mesurer l'intensité lumineuse transmise, au point de contrôle, au travers de la paroi de l'échantillon à contrôler, à la longueur d'onde sélectionnée lors de l'opération h) ;

n) calculer, à partir de la mesure effectuée lors de l'opération m) et de la fonction de corrélation, l'épaisseur du revêtement au point de contrôle.

**2.** Procédé selon la revendication 1, dans lequel la longueur d'onde sélectionnée lors de l'opération h) correspond à un pic de transmission.

**3.** Procédé selon la revendication 1 ou 2, dans lequel l'étape de calibration comprend en outre les opérations suivantes :

h') sélectionner une longueur d'onde dans l'infrarouge ;

i') mesurer la valeur de l'intensité lumineuse transmise correspondant à cette longueur d'onde au travers de l'échantillon test ;

dans lequel la fonction de corrélation, établie lors de l'opération l), est définie comme suit :

$$t(P) = a \cdot (-\ln \Gamma_\lambda(P) + R \cdot \ln \Gamma_{IR}(P)) + b$$

où :

- $t(P)$ est l'épaisseur, à calculer, du revêtement au point $P$,
- $\Gamma_\lambda(P)$ est le coefficient de transmission au point $P$ à la longueur d'onde ($\lambda$) sélectionnée lors de l'opération h),
- $\Gamma_{IR}(P)$ est le coefficient de transmission au point $P$ dans l'infrarouge à la longueur d'onde $IR$ sélectionnée lors de l'opération h'),
- $a$ et $b$ sont des constantes ;
- $R$ est la moyenne, pour l'ensemble des points $P$ de mesure, sélectionnés sur un ou plusieurs récipients tests non revêtus similaires au récipient à contrôler, d'un coefficient $R(P)$, dit de pondération, défini comme suit :

$$R(P) = \frac{\ln \Gamma_\lambda(P)}{\ln \Gamma_{IR}(P)}$$

et dans lequel l'étape de mesure comprend les opérations suivantes :

m') mesurer l'intensité lumineuse transmise, au point de contrôle, au travers de l'échantillon à contrôler, à la longueur d'onde $IR$ sélectionnée dans l'infrarouge à l'opération h'),

n') déduire, à partir des coefficients de transmission mesurés lors des opérations m) et m') et de la fonction de corrélation établie à l'étape de calibration, l'épaisseur du revêtement au point de contrôle.

**4.** Procédé selon la revendication 3, dans lequel la longueur d'onde $IR$ sélectionnée dans l'infrarouge lors de l'opération h') est supérieure ou égale à 800 nm.

**5.** Procédé selon la revendication 4, dans lequel la longueur d'onde $IR$ sélectionnée dans l'infrarouge lors de l'opération h') est égale à 1000 nm environ.

**6.** Procédé selon l'une des revendications 1 à 5, dans lequel les opérations a) à d), i), j) et k) sont répétées pour une pluralité d'échantillons tests similaires.

**7.** Procédé selon l'une des revendications 1 à 6, dans lequel la gamme de longueur d'ondes choisie dans l'opération e) est comprise entre 300 et 1200 nm.

8. Procédé selon l'une des revendications 1 à 7, appliqué au contrôle de l'épaisseur d'un revêtement dont est pourvu un substrat réalisé dans une matière thermoplastique.

9. Procédé selon l'une des revendications 1 à 8, appliqué à la mesure de l'épaisseur d'un revêtement en carbone amorphe.

10. Procédé selon l'une des revendications 1 à 7, dans lequel les échantillons sont des récipients dont la paroi revêtue constitue le substrat.

**Patentansprüche**

1. Verfahren zum Messen, an einer aus einem mit einer Beschichtung versehenen Substrat bestehenden Probe, der Dicke der Beschichtung an mindestens einem vorbestimmten Kontrollpunkt, wobei dieses Verfahren einen Kalibrierungsschritt enthält, der die folgenden Vorgänge enthält:

a) Bereitstellen einer Testprobe gleicher Herstellung wie die zu kontrollierende Probe;
b) Auswahl eines vorbestimmten Messpunkts auf der Testprobe;
c) Beleuchten der Testprobe mittels eines weißen Lichtstrahls, der an einem vorbestimmten Messpunkt auf die Beschichtung fokussiert ist;
d) Auffangen des Teils des Strahls, der durch die Testprobe hindurch übertragen wird;
e) Festlegen des Spektrums der durch die Testprobe hindurch übertragenen Lichtstärke in einem vorbestimmten Bereich von Wellenlängen;
f) Vergleich dieses Spektrums mit dem vorab festgelegten Spektrum der am gleichen Messpunkt durch eine nicht beschichtete Probe gleicher Herstellung wie die zu kontrollierende Probe hindurch übertragenen Lichtstärke;
g) Markieren eines den zwei Spektren gemeinsamen Durchlassbands, in dem eine Abweichung zwischen diesen erfasst werden kann;
h) Auswahl innerhalb dieses Durchlassbands einer Wellenlänge entsprechend einer Abweichung zwischen den zwei Spektren;
i) Messen des Werts der übertragenen Lichtstärke entsprechend dieser Wellenlänge im Spektrum der Testprobe und daraus Ableiten des Übertragungskoeffizienten bei der im Vorgang h) ausgewählten Wellenlänge;
j) Wiederholen der Vorgänge a) bis d) und i) für eine Vielzahl von Messpunkten;
k) physikalisches Messen an jedem Messpunkt einer Höhenunterschiedshöhe zwischen einer beschichteten Zone und einer nicht beschichteten Zone einer Probe entsprechend der wirklichen Höhe der Beschichtung;
l) Festlegen, ausgehend von den durchgeführten Messungen, einer Korrelationsfunktion zwischen einerseits dem Übertragungskoeffizienten auf der im Vorgang h) ausgewählten Wellenlänge und andererseits der Dicke der Beschichtung;

wobei dieses Verfahren außerdem einen Messschritt enthält, der die folgenden Vorgänge enthält:

m) Messen der am Kontrollpunkt durch die Wand der zu kontrollierenden Probe hindurch übertragenen Lichtstärke auf der im Vorgang h) ausgewählten Wellenlänge;
n) Berechnen, ausgehend von der im Vorgang m) ausgeführten Messung und der Korrelationsfunktion, der Dicke der Beschichtung am Kontrollpunkt.

2. Verfahren nach Anspruch 1, wobei die im Vorgang h) ausgewählte Wellenlänge einer Übertragungsspitze entspricht.

3. Verfahren nach Anspruch 1 oder 2, wobei der Kalibrierungsschritt außerdem die folgenden Vorgänge enthält:

h')Auswahl einer Wellenlänge im Infrarotbereich;
i')Messen des Werts der dieser Wellenlänge entsprechenden, durch die Testprobe hindurch übertragenen Lichtstärke;

wobei die Korrelationsfunktion, die im Vorgang l) festgelegt wurde, folgendermaßen definiert wird:

$$t(P) = a \cdot (-\ln \Gamma_\lambda(P) + R \cdot \ln \Gamma_{IR}(P)) + b$$

wobei

- $t(P)$ die zu berechnende Dicke der Beschichtung am Punkt P ist,
- $\Gamma_\lambda(P)$ der Übertragungskoeffizient am Punkt P auf der im Vorgang h) ausgewählten Wellenlänge ($\lambda$) ist,
- $\Gamma_{IR}(P)$ der Übertragungskoeffizient am Punkt P im Infrarotbereich auf der im Vorgang h') ausgewählten Wellenlänge IR ist,
- $a$ und $b$ Konstanten sind;
- R der Mittelwert, für die Gesamtheit der Messpunkte P, die an einem oder mehreren nicht beschichteten Testbehälter ähnlich dem zu kontrollierenden Testbehälter ausgewählt wurden, eines so genannten Gewichtungskoeffizienten R(P) ist, der folgendermaßen definiert wird:

$$R(P) = \frac{In\Gamma_\lambda(P)}{In\Gamma_{IR}(P)}$$

und wobei der Messschritt die folgenden Vorgänge enthält:

m')Messen der übertragenen Lichtstärke am Kontrollpunkt durch die zu kontrollierende Probe hindurch, auf der im Vorgang h') ausgewählten Wellenlänge IR im Infrarotbereich,

n')Ableiten, ausgehend von den in den Vorgängen m) und m') gemessenen Übertragungskoeffizienten und der im Kalibrierungsschritt festgelegten Korrelationsfunktion, der Dicke der Beschichtung am Kontrollpunkt.

4. Verfahren nach Anspruch 3, wobei die beim Vorgang h') ausgewählte Wellenlänge IR im Infrarotbereich größer als oder gleich 800 nm ist.

5. Verfahren nach Anspruch 4, wobei die beim Vorgang h') ausgewählte Wellenlänge IR im Infrarotbereich gleich etwa 1000 nm ist.

6. Verfahren nach einem der Ansprüche 1 bis 5, wobei die Vorgänge a) bis d), i), j) und k) für eine Vielzahl von ähnlichen Testproben wiederholt werden.

7. Verfahren nach einem der Ansprüche 1 bis 6, wobei der im Vorgang e) ausgewählte Wellenlängenbereich zwischen 300 und 1200 nm liegt.

8. Verfahren nach einem der Ansprüche 1 bis 7, angewendet an die Kontrolle der Dicke einer Beschichtung, mit der ein Substrat versehen ist, das aus einem thermoplastischen Werkstoff hergestellt ist.

9. Verfahren nach einem der Ansprüche 1 bis 8, angewendet an die Messung der Dicke einer Beschichtung aus amorphem Kohlenstoff.

10. Verfahren nach einem der Ansprüche 1 bis 7, wobei die Proben Behälter sind, deren beschichtete Wand das Substrat bildet.

**Claims**

1. Method for measuring, on a sample composed of a substrate equipped with a coating, the thickness of the coating at at least one preset inspection point, this method comprising a calibrating step comprising the following operations:

a) providing a test sample manufactured in the same way as the sample to be inspected;
b) selecting, on the test sample, a preset measurement point;
c) illuminating the test sample by means of a beam of white light, said beam being focused on the coating at a preset measurement point;
d) collecting the portion of the beam transmitted through the test sample;
e) establishing the spectrum of the light intensity transmitted through the test sample in a preset wavelength range;
f) comparing this spectrum to the spectrum, established beforehand, of the light intensity transmitted, at the same measurement point, through an uncoated sample manufactured in the same way as the sample to be inspected;
g) locating a passband common to the two spectra, in which a deviation therebetween may be detected;
h) selecting, within this passband, a wavelength corresponding to a deviation between the two spectra;
i) measuring the value of the transmitted light intensity corresponding to this wavelength in the spectrum of the test sample and deducing therefrom the transmission coefficient at the wavelength selected in operation h);
j) repeating operations a) to d) and i) for a plurality of measurement points;
k) physically measuring, at each measurement point, a height difference between a coated zone and an uncoated zone of a sample, corresponding to the actual thickness of the coating; and
l) establishing, on the basis of the measurements carried out, a correlation function between, on the one hand, the transmission coefficient at the wavelength selected in operation h), and on the other hand, the thickness of the coating;

this method furthermore comprising a measuring step comprising the following operations:

m) measuring the light intensity transmitted, at the inspection point, through the wall of the sample to be inspected, at the wavelength selected in operation h); and
n) calculating, on the basis of the measurement carried out in operation m) and of the correlation function, the thickness of the coating at the inspection point.

2. Method according to Claim 1, wherein the wavelength selected in operation h) corresponds to a transmission peak.

3. Method according to Claim 1 or 2, wherein the calibrating step furthermore comprises the following operations:

> h') selecting a wavelength in the infrared; and
> i') measuring the value of the light intensity, corresponding to this wavelength, transmitted through the test sample;

wherein the correlation function, established in operation 1), is defined as follows:

$$t(P) = a \cdot \left( -ln\Gamma_\lambda(P) + R \cdot ln\Gamma_{IR}(P) \right) + b$$

where

> - $t(P)$ is the thickness, to be calculated, of the coating at the point $P$;
> - $\Gamma_\lambda(P)$ is the transmission coefficient at the point $P$ at the wavelength ($\lambda$) selected in operation h);
> - $\Gamma_{IR}(P)$ is the transmission coefficient at the point $P$ in the infrared at the wavelength $IR$ selected in operation h');
> - $a$ and $b$ are constants; and
> - $R$ is the average, for all of the selected measurement points $P$, over one or more uncoated test containers similar to the container to be inspected, of a coefficient $R(P)$, called the weighting coefficient, defined as follows:

$$R(P) = \frac{ln\Gamma_\lambda(P)}{ln\Gamma_{IR}(P)}$$

and wherein the measuring step comprises the following operations:

> m') measuring the light intensity transmitted, at the inspection point, through the sample to be inspected, at the wavelength $IR$ selected in the infrared in operation h'); and
> n') deducing, on the basis of the transmission coefficients measured in operations m) and m') and of the correlation function established in the calibrating step, the thickness of the coating at the inspection point.

4. Method according to Claim 3, wherein the wavelength $IR$ selected in the infrared in operation h') is longer than or equal to 800 nm.

5. Method according to Claim 4, wherein the wavelength $IR$ selected in the infrared in operation h') is about equal to 1000 nm.

6. Method according to one of Claims 1 to 5, wherein the operations a) to d), i), j) and k) are repeated for a plurality of similar test samples.

7. Method according to one of Claims 1 to 6, wherein the wavelength range chosen in operation e) is comprised between 300 and 1200 nm.

8. Method according to one of Claims 1 to 7, applied to the inspection of the thickness of a coating with which a substrate made from a thermoplastic is provided.

9. Method according to one of Claims 1 to 8, applied to the measurement of the thickness of a coating made of amorphous carbon.

10. Method according to one of Claims 1 to 7, wherein the samples are containers the coated wall of which forms the substrate.

a ⌇ → FOURNIR UN RECIPIENT TEST

SLECTIONNER UN POINT DE MESURE ⌇ b

ECLAIRER LA PAROI AU POINT DE MESURE ⌇ c

RECUEILLIR LA PART DE FAISCEAU TRANSMISE ⌇ d

PREMIER POINT DE MESURE ?

OUI → ETABLIR LE SPECTRE ⌇ e

NON

COMPARER LES SPECTRES RECIPIENT TEST - RECIPIENT NON REVETU ⌇ f

REPERER UNE BANDE PASSANTE COMMUNE ⌇ g

SELECTIONNER UNE LONGUEUR D'ONDE DANS LA BANDE PASSANTE ⌇ h

MESURER L'INTENSITE TRANSMISE A LA LONGUEUR D'ONDE SELECTIONNEE ⌇ i

Fig.1A

k

DERNIER POINT DE MESURE ?

NON

OUI → MESURER L'EPAISSEUR RELLE AUX POINTS DE MESURE

l

DERNIER RECIPIENT TEST ?

OUI → ETABLIR UNE FONCTION DE CORRELATION TRANSMISSION / EPAISSEUR RELLE

NON

```
┌──────────────────────────────┐
│     FOURNIR LE RECIPIENT     │
│        A CONTROLER           │⌐⌐ a'
└──────────────────────────────┘
               │
               ▼
┌──────────────────────────────┐
│         SLECTIONNER          │
│      UN POINT DE MESURE      │⌐⌐ b'
└──────────────────────────────┘
               │
               ▼
┌──────────────────────────────┐
│      ECLAIRER LA PAROI       │
│     AU POINT DE CONTRÔLE     │⌐⌐ c'
└──────────────────────────────┘
               │
               ▼
┌──────────────────────────────┐
│  RECUEILLIR LA PART DE FAISCEAU │
│          TRANSMISE           │⌐⌐ d'
└──────────────────────────────┘
               │
               ▼
┌──────────────────────────────┐
│  MESURER L'INTENSITE TRANSMISE │
│ A LA LONGUEUR D'ONDE SELECTIONNEE │⌐⌐ m
└──────────────────────────────┘
               │
               ▼
┌──────────────────────────────┐
│    CALCULER L'EPAISSEUR DU   │
│         REVÊTEMENT           │⌐⌐ n
└──────────────────────────────┘
               │
               ▼
           ◇ DERNIER
   NON      POINT DE
           MESURE ?
               │ OUI
               ▼
┌──────────────────────────────┐
│             FIN              │
└──────────────────────────────┘
```

# Fig.1B

14

Fig.2

Fig.3

Fig.4

Fig.5

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1068032 A
- US 6919114 B, Sidel
- EP 773166 A
- US 6589619 B, Kirin
- EP 1500600 A
- US 20050118365 A
- WO 2004012999 A
- US 20040065841 A
- WO 2005103605 A